# EUROPEAN PATENT APPLICATION

(11) **EP 4 776 692 A1**
(43) Date of publication of application: **15.07.2026**
(21) Application number: 24878995.0
(22) Date of filing: 15.10.2024
(51) Int. Cl.: H04W 36/08

(54) **COMMUNICATION METHOD AND COMMUNICATION APPARATUS**

(30) Priority: 20.10.2023 CN 202311373990
(71) Applicant: Huawei Technologies Co., Ltd., Shenzhen, Guangdong 518129 (CN)
(72) Inventor: LI, Yongcui, Shenzhen, Guangdong 518129 (CN); LI, Yan, Shenzhen, Guangdong 518129 (CN); PAN, Qi, Shenzhen, Guangdong 518129 (CN)
(74) Representative: Isarpatent
(86) International application number: PCT/CN2024/124964
(87) International publication number: WO 2025/082352

(57) **Abstract**

This application provides a communication method and a communication apparatus. The method indicates a switch of a core network transport path. The method specifically includes: An SMF or a PCF establishes a second transport path, which includes at least one transport path between a terminal device and a core network device. The SMF sends first request information to a UPF, instructing the user plane function network element to enable, when a microburst exists on a current first transport path, the established second transport path to transmit a packet of a next frame. This method addresses transmission delay issues caused by core network bursts in microburst scenarios of media service flows, and helps prevent out-of-order arrival of data packets, thereby improving user experience.

## Description

This application claims priority to Chinese Patent Application No. 202311373990.9, filed with the China National Intellectual Property Administration on October 20, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With development of society and technology, user demands for media services are growing steadily, along with higher requirements for user experience of media services. This is especially true for virtual reality (virtual reality, VR), augmented reality (augmented reality, AR), and video services, where users increasingly require high definition and low delay in media services.

When a media service flow is transmitted via a mobile network, transmission delay of VR services may increase due to a transmission capability of a wireless node. A reason lies in that, compared with a wired link from a data center to a wireless device, which can reach 100 Gbps, 50 Gbps, or 10 Gbps, a current 5th generation (5th generation, 5G) base station typically offers a downlink rate below 1 Gbps, creating a bandwidth bottleneck for end-to-end transmission. Even if an intermediate node has sufficient buffer space to prevent packet loss caused by severe congestion, the queuing of a large quantity of data packets can still lead to a rapid increase in downlink delay, ultimately affecting user satisfaction.

Moreover, the media service flow has microburst characteristics, and multi-flow concurrency affects service delay. Due to the pronounced microburst characteristics of the media service flow, where a large amount of data is sent within a few milliseconds, an increase in a quantity of media users can lead to a plurality of concurrent media streams with microburst characteristics, thereby increasing a queue length in 5G or new radio (new radio, NR). This results in increased queuing delays and triggers a microburst along a core network path, making it difficult for the plurality of media streams to meet quality of experience (Quality of Experience, QoE).

Therefore, how to mitigate data packet transmission delays caused by core network bursts is one of research hotspots in recent years.

### SUMMARY

This application provides a communication method and a communication apparatus to address transmission delay issues caused by core network bursts in microburst scenarios of media service flows. It helps prevent out-of-order arrival of data packets, thereby improving user experience.

According to a first aspect, a communication method is provided. The method may be performed by any device in a session management function network element, a policy control function network element, or an access network device, or may be performed by a component (for example, a chip or a circuit) of the session management function network element, the policy control function network element, or the access network device. This is not limited.

The method indicates core network transport path switching. The method specifically includes: establishing a second transport path, where the second transport path includes at least one transport path between a terminal device and a core network device; and sending first request information, where the first request information indicates a user plane function network element to enable, when a microburst exists on a current first transport path, the established second transport path to transmit a packet of a next frame.

Based on the foregoing technical solution, the session management function network element or the policy control function network element determines to establish the second transport path, and the session management function network element or the access network device sends the first request information, to indicate the user plane function network element to enable the newly established second transport path to transmit a packet of a next frame when a microburst exists on the current first transport path. This addresses transmission delay issues caused by core network bursts in microburst scenarios of media service flows, and helps prevent out-of-order arrival of data packets, thereby improving user experience.

It should be understood that the first transport path includes at least one currently used transport path between the terminal device and the core network device, and the currently used packet transport path between the terminal device and the core network device is the first transport path.

It should be understood that the microburst means that a large quantity of data packets arrive in a very short time, and a transmission congestion problem may be caused.

It should be understood that the second transport path includes at least one newly established transport path between the current terminal device and the core network device. In some optional embodiments, the second transport path is also referred to as a heterogeneous path. The second transport path may be a new transport path between the terminal device and the core network device. For example, there are new transport paths between the terminal device and the access network device and between the access network device and the user plane function network element. Alternatively, only some links are new transport paths. For example, a same transport path is used between the terminal device and the access network device, and a new transport path is used between the access network device and the user plane function network element.

It should be understood that, in some optional embodiments, the session management function (session management function, SMF) network element may determine to establish the second transport path, or the policy control function (policy control function, PCF) network element may determine to establish the second transport path.

It should be understood that, in some optional embodiments, the SMF may send the first request information, or the access network device may send the first request information.

In some optional embodiments, the first request information may indicate to establish the second transport path and enable the second transport path to transmit a packet of a next frame.

With reference to the first aspect, in some implementations of the first aspect, the method further includes: sending second request information. The second request information indicates the access network device to detect whether a microburst exists on the current first transport path.

Based on the foregoing technical solution, the SMF is further configured to send the second request information, where the second request information indicates the access network device to detect whether a microburst exists on the current transport path. In this way, in microburst scenarios, occurrence of the microburst can be sensed in time, and a transport path is adjusted. This addresses transmission delay issues caused by core network bursts and helps prevent out-of-order arrival of data packets, thereby improving user experience.

With reference to the first aspect, in some implementations of the first aspect, the method further includes: receiving third request information, where the third request information carries first indication information indicating to establish the second transport path; and determining, based on the first indication information or based on local configuration information, to establish the second transport path.

Based on the foregoing technical solution, the SMF receives the third request information sent by an application function (application function, AF) network element, where the third request information is sent by the AF to the SMF. The SMF or the PCF may determine, based on the third request information, to establish the second transport path. The third request information carries the first indication information, and the SMF or the PCF may determine, based on the first indication information or the local configuration information, to establish the second transport path. This addresses transmission delay issues caused by core network bursts in microburst scenarios, and helps prevent out-of-order arrival of data packets, thereby improving user experience. It should be understood that, in an optional embodiment, the third request information carries service description information and the first indication information. The service description information indicates a current media service, and may be specifically information such as an IP 5-tuple or a 3-tuple corresponding to the media service. The first indication information indicates that the media service has a requirement for path switching, or indicates that the media service has a quality of service (quality of service, QoS) adjustment requirement.

It should be understood that, in an optional embodiment, the SMF or the PCF determines or triggers establishment of the heterogeneous path based on the received service description information and a received configuration policy.

It should be further understood that, in another optional embodiment, the SMF or the PCF determines or triggers establishment of the heterogeneous path based on the received first indication information.

It should be understood that, in some optional embodiments, that the AF sends the third request information to the SMF includes: The AF sends the third request information to the SMF through the PCF or a network exposure function (network exposure function, NEF) network element.

With reference to the first aspect, in some implementations of the first aspect, the second request information includes second indication information. The second indication information indicates the access network device to send fourth request information when determining that a first time difference is greater than or equal to a first threshold. The first time difference includes a time difference between arrival of a last packet of a current frame and arrival of a first packet of a next frame or a time difference between arrival of a first packet of a current frame and arrival of a first packet of a next frame. The fourth request information indicates the user plane function network element to enable the established second transport path for transmission.

Based on the foregoing technical solution, the second request information sent by the SMF to the access network device indicates the access network device to detect the first time difference and perform determining on the first time difference and the first threshold, and send the fourth request information to the user plane function (user plane function, UPF) network element when the first time difference is greater than or equal to the first threshold. The first time difference includes a time difference between arrival of a last packet of a current frame and arrival of a first packet of a next frame on the first transport path. In this way, in microburst scenarios, the user plane function network element is notified of a current microburst, to trigger enabling of the second transport path. This addresses transmission delay issues caused by core network bursts and helps prevent out-of-order arrival of data packets, thereby improving user experience.

It should be understood that, in some possible embodiments, the first threshold may be included in the second request information, or included in the local configuration information on the access network device side.

With reference to the first aspect, in some implementations of the first aspect, the second request information further includes the first threshold.

Based on the foregoing technical solution, when the second request information sent by the SMF to the access network device carries the first threshold, the access network device detects the first time difference based on the received second request information, and performs determining on the first time difference and the first threshold. In this way, in microburst scenarios, the user plane function network element is notified of a current microburst, to trigger enabling of the second transport path. This addresses transmission delay issues caused by core network bursts and helps prevent out-of-order arrival of data packets, thereby improving user experience.

It should be understood that the first threshold is an adjustable threshold, and is not a fixed value. The first threshold may be adjusted based on an actual network status of a current transport path, or may be properly adjusted based on another parameter. This is not specially limited in this application.

With reference to the first aspect, in some implementations of the first aspect, the first request information includes an N4 rule. When the user plane function network element receives third indication information, the user plane function network element enables, according to the N4 rule, the established second transport path to transmit a packet of a next frame. The third indication information is carried in the fourth request information.

Based on the foregoing technical solution, the first request information includes the N4 rule. When receiving the third indication information, the UPF enables, according to the N4 rule, the second transport path to transmit a packet of a next frame. Therefore, in microburst scenarios, enabling of the second path is triggered. This addresses transmission delay issues caused by core network bursts and helps prevent out-of-order arrival of data packets, thereby improving user experience.

It should be understood that N4 is an interface sequence number, and a transmission interface between the UPF and the SMF is an N4 interface. For a meaning of the interface sequence number, refer to a meaning defined in a related standard protocol. This is not specially limited in this application.

It should be understood that the UPF determines, according to the received N4 rule and the third indication information, to enable the established second transport path to transmit the packet of the next frame. The N4 rule is carried in the first request information, and the third indication information is carried in the fourth request information. In other words, the UPF determines, based on the received first request information and/or fourth request information, to enable the established second transport path to transmit a packet of a next frame.

It should be understood that the first request information and the fourth request information are merely names, and a sequence of sending the request information is not limited, and a sequence of sending the first request information and the fourth request information is not limited either.

With reference to the first aspect, in some implementations of the first aspect, the first indication information indicates that a service currently being transmitted has a requirement for path switching, or indicates that a service currently being transmitted has a requirement for quality of service adjustment.

Based on the foregoing technical solution, the SMF or the PCF determines or triggers establishment of the heterogeneous path based on the received first indication information. This addresses transmission delay issues caused by core network bursts in microburst scenarios, and helps prevent out-of-order arrival of data packets, thereby improving user experience.

It should be understood that, in an optional embodiment, the third request information further includes service description information, and the SMF or the PCF may determine, based on the service description information, a service flow on which the second transport path needs to be established and switched currently. Then, the second transport path is enabled for transmission of the service currently being transmitted based on an indication in the first indication information.

According to a second aspect, a communication method is provided. The method may be performed by an access network device, or may be performed by a component (for example, a chip or a circuit) of the access network device. This is not limited.

The method indicates core network transport path switching. Specifically, the method includes: detecting whether a microburst exists on a current first transport path; and sending fourth request information when the microburst exists on the current first transport path. The fourth request information indicates a user plane function network element to enable an established second transport path to transmit a packet of a next frame.

Based on the foregoing technical solution, the access network device detects whether a microburst exists on the current first transport path. When a microburst exists on the first transport path, the fourth request information is sent to a UPF, to indicate the UPF to enable the established second transport path to transmit a packet of a next frame. This addresses transmission delay issues caused by core network bursts in microburst scenarios, and helps prevent out-of-order arrival of data packets, thereby improving user experience.

With reference to the second aspect, in some implementations of the second aspect, the method further includes: receiving second request information. The second request information indicates the access network device to detect whether a microburst exists on the current first transport path.

Based on the foregoing technical solution, the access network device receives the second request information, where the second request information indicates the access network device to detect whether a microburst exists on the current transport path. Therefore, in microburst scenarios, the user plane function network element is indicated to enable the second transport path. This addresses transmission delay issues caused by core network bursts and helps prevent out-of-order arrival of data packets, thereby improving user experience.

With reference to the second aspect, in some implementations of the second aspect, the second request information includes second indication information. The second indication information indicates the access network device to send the fourth request information when determining that a first time difference is greater than or equal to a first threshold. The first time difference includes a time difference between arrival of a last packet of a current frame and arrival of a first packet of a next frame.

Based on the foregoing technical solution, the second request information received by the access network device includes the second indication information. The second indication information indicates the access network device to detect the time difference between arrival of the last packet of the current frame and arrival of the first packet of the next frame, and compare the detected first time difference with the first threshold. When the first time difference is greater than or equal to the first threshold, the access network device sends the fourth request information. Therefore, in microburst scenarios, the user plane function network element is indicated to enable the second transport path. This addresses transmission delay issues caused by core network bursts and helps prevent out-of-order arrival of data packets, thereby improving user experience.

It should be understood that, in some possible embodiments, the first threshold may be included in the second request information, or included in local configuration information on an access network device side.

With reference to the second aspect, in some implementations of the second aspect, the second request information further includes the first threshold.

With reference to the second aspect, in some implementations of the second aspect, the fourth request information indicates that a microburst exists on the current first transport path.

Based on the foregoing technical solution, when the second request information received by the access network device carries the first threshold, the access network device detects the first time difference, and performs determining on the first time difference and the first threshold. Therefore, in microburst scenarios, the user plane function network element is indicated to enable the second transport path. This addresses transmission delay issues caused by core network bursts and helps prevent out-of-order arrival of data packets, thereby improving user experience.

It should be understood that the first threshold is an adjustable threshold, and is not a fixed value. The first threshold may be adjusted based on an actual network status of a current transport path, or may be properly adjusted based on another parameter. This is not specially limited in this application.

With reference to the second aspect, in some implementations of the second aspect, that the access network device sends the fourth request information when determining that the first time difference is greater than or equal to the first threshold specifically includes: The access network device sends the fourth request information to a session management function network element, then, the session management function network element sends the fourth request information to the user plane function network element, or the access network device adds the fourth request information to a general packet radio service tunneling protocol-user plane (general packet radio service tunneling protocol-user plane, GTP-U) header of an uplink data packet, and directly sends the fourth request information to the user plane function network element.

Based on the foregoing technical solution, the access network device directly sends the fourth request information to the user plane function network element through the session management network element. This addresses transmission delay issues caused by core network bursts in microburst scenarios of media service flows, and helps prevent out-of-order arrival of data packets, thereby improving user experience.

According to a third aspect, a communication method is provided. The method may be performed by any device in a session management function network element or a policy control function network element, or may be performed by a component (for example, a chip or a circuit) of the session management function network element or the policy control function network element. This is not limited.

The method indicates core network transport path switching. Specifically, the method includes: establishing a second transport path, where the second transport path includes at least one transport path between a terminal device and a core network device. The method further includes: sending first request information, where the first request information indicates a user plane function network element to detect whether a microburst exists on the current first transport path, and to enable, when the microburst exists, the established second transport path to transmit a packet of a next frame.

Based on the foregoing technical solution, the session management function network element or the policy control function network element determines to establish the second transport path. The session management function network element further sends the first request information, to indicate the user plane function network element to detect whether a microburst exists on the current first transport path. When a microburst exists on the current first transport path, the newly established second transport path is enabled to transmit a packet of a next frame. This addresses transmission delay issues caused by core network bursts in microburst scenarios, and helps prevent out-of-order arrival of data packets, thereby improving user experience.

In some optional embodiments, the first request information may indicate to establish the second transport path, detect whether a microburst exists on the current first transport path, and when the microburst exists, enable the established second transport path to transmit a packet of a next frame.

It should be understood that the first transport path includes at least one currently used transport path between the terminal device and the core network device, and the currently used packet transport path between the terminal device and the core network device is the first transport path.

It should be understood that the second transport path includes at least one newly established transport path between the current terminal device and the core network device. In some optional embodiments, the second transport path is also referred to as a heterogeneous path. The second transport path may be a new transport path between the terminal device and the core network device. For example, there are new transport paths between the terminal device and the access network device and between the access network device and the user plane function network element. Alternatively, only some links are new transport paths. For example, a same transport path is used between the terminal device and the access network device, and a new transport path is used between the access network device and the user plane function network element.

It should be understood that, in some optional embodiments, the session management function (session management function, SMF) network element may determine to establish the second transport path, or the policy control function (policy control function, PCF) network element may determine to establish the second transport path.

With reference to the third aspect, in some implementations of the third aspect, the method further includes: receiving second request information, where the second request information carries first indication information indicating to establish the second transport path; and determining, based on the first indication information or based on local configuration information, to establish the second transport path.

Based on the foregoing technical solution, the SMF receives the second request information sent by an AF, and the second request information is sent by the AF to the SMF. The SMF or the PCF may determine, based on the second request information, to establish the second transport path. The second request information carries the first indication information, and the SMF or the PCF may determine, based on the first indication information or the local configuration information, to establish the second transport path. This addresses transmission delay issues caused by core network bursts in microburst scenarios, and helps prevent out-of-order arrival of data packets, thereby improving user experience.

It should be understood that, in an optional embodiment, the second request information carries service description information and the first indication information. The service description information indicates a service flow that currently has a requirement for path switching, and may be specifically information such as an IP 3-tuple or a 5-tuple. The first indication information indicates that a service has a requirement for path switching, or indicates that a media service has a quality of service (quality of service, QoS) adjustment requirement.

It should be understood that, in an optional embodiment, the SMF or the PCF determines or triggers establishment of the heterogeneous path based on the received service description information and a received configuration policy.

It should be further understood that, in another optional embodiment, the SMF or the PCF determines or triggers establishment of the heterogeneous path based on the received first indication information.

It should be understood that, in some optional embodiments, that the AF sends the second request information to the SMF includes: The AF sends the second request information to the SMF through the PCF or a network exposure function (network exposure function, NEF) network element.

With reference to the third aspect, in some implementations of the third aspect, the first request information includes an N4 rule. The user plane function network element detects a last packet of a frame according to the N4 rule; and when detecting the last packet of the frame, triggers detection of a second time difference for the current first transport path. The second time difference includes transmission delay of the first transport path.

Based on the foregoing technical solution, the first request information includes the N4 rule. The UPF detects the last packet of the frame in the first transport path according to the N4 rule. When the last packet of the frame is detected, detection of the second time difference for the current first transport path is triggered. The second time difference includes transmission delay of the first transport path. This addresses transmission delay issues caused by core network bursts in microburst scenarios of media service flows, and helps prevent out-of-order arrival of data packets, thereby improving user experience.

It should be understood that N4 is an interface sequence number, and a transmission interface between the UPF and the SMF is an N4 interface. For a meaning of the interface sequence number, refer to a meaning defined in a related standard protocol. This is not specially limited in this application.

With reference to the third aspect, in some implementations of the third aspect, the first request information includes a second threshold. When the second time difference is greater than or equal to the second threshold, it is determined that a microburst exists on the current first transport path.

Based on the foregoing technical solution, when the first request information sent by the SMF to the UPF carries the second threshold, the UPF detects the second time difference based on the received first request information, and performs determining on the second time difference and the second threshold. This addresses transmission delay issues caused by core network bursts in microburst scenarios, and helps prevent out-of-order arrival of data packets, thereby improving user experience.

It should be understood that the second threshold is an adjustable threshold, and is not a fixed value. The second threshold may be adjusted based on an actual network status of a current transport path, or may be properly adjusted based on another parameter. This is not specially limited in this application.

With reference to the third aspect, in some implementations of the third aspect, the first indication information indicates that a service currently being transmitted has a requirement for path switching, or indicates that a service currently being transmitted has a requirement for quality of service adjustment.

Based on the foregoing technical solution, the SMF or the PCF determines or triggers establishment of the heterogeneous path based on the received first indication information. This addresses transmission delay issues caused by core network bursts in microburst scenarios, and helps prevent out-of-order arrival of data packets, thereby improving user experience.

It should be understood that, in an optional embodiment, the second request information further includes service description information, and the SMF or the PCF may determine, based on the service description information, that a media service is currently transmitted. Then, the second transport path is enabled for transmission of the currently transmitted media service based on an indication in the first indication information.

It should be further understood that, in another optional embodiment, the first request information further includes service description information, and the SMF or the PCF may determine, based on the service description information, a service flow that currently has a requirement for path switching. The service flow may be specifically information such as an IP 3-tuple or a 5-tuple. Then, the second transport path is enabled to transmit the currently transmitted media service based on a requirement for quality of service adjustment indication in the first indication information.

According to a fourth aspect, a communication method is provided. The method may be performed by any device in a user plane function network element, or may be performed by a component (for example, a chip or a circuit) of the user plane function network element. This is not limited.

The method indicates core network transport path switching. Specifically, the method includes: establishing a second transport path, where the second transport path includes at least one transport path between a terminal device and a core network device. The method further includes: receiving first request information, where the first request information indicates the user plane function network element to enable the established second transport path to transmit a packet of a next frame.

Based on the foregoing technical solution, a session management function network element or a policy control function network element determines to establish the second transport path, and the user plane function network element receives the first request information, and enables the newly established second transport path to transmit a packet of a next frame. This addresses transmission delay issues caused by core network bursts in microburst scenarios, and helps prevent out-of-order arrival of data packets, thereby improving user experience.

With reference to the fourth aspect, in some implementations of the fourth aspect, the first request information indicates a user plane network element to detect whether a microburst exists on the current first transport path, and when the microburst exists, enable the established second transport path to transmit a packet of a next frame.

Based on the foregoing technical solution, the session management function network element or the policy control function network element determines to establish the second transport path, and the user plane function network element receives the first request information, to indicate the user plane network element to detect whether a microburst exists on the current first transport path. When the microburst exists, the newly established second transport path is enabled to transmit a packet of a next frame. This addresses transmission delay issues caused by core network bursts in microburst scenarios, and helps prevent out-of-order arrival of data packets, thereby improving user experience.

With reference to the fourth aspect, in some implementations of the fourth aspect, the first request information is from an access network device side. When detecting that a microburst exists on the first transport path, the access network device directly sends the first request information to the user plane network element device through the SMF, to indicate the user plane network element device to enable the established second transport path to transmit a packet of a next frame.

Based on the foregoing technical solution, the session management function network element or the policy control function network element determines to establish the second transport path, and the user plane function network element receives the first request information, to indicate the user plane network element to enable the newly established second transport path to transmit a packet of a next frame when a microburst exists on the current first transport path. This addresses transmission delay issues caused by core network bursts in microburst scenarios, and helps prevent out-of-order arrival of data packets, thereby improving user experience.

With reference to the fourth aspect, in some implementations of the fourth aspect, the UPF detects whether a microburst exists on the current first transport path. The UPF triggers, based on an indication in the first request information, detection of delay information of a current path when detecting that a last packet arrives. Specifically, the UPF may detect the delay information by adding a timestamp to a packet, or the UPF may further measure delay of a current path according to a performance measurement function (performance measurement function, PMF) protocol. The UPF may determine, by determining transmission delay of the current path, whether a microburst exists on the current path, and then determine, based on a determining result, whether to enable the newly established second transport path to transmit a packet of a next frame.

Based on the foregoing technical solution, the user plane function network element detects, based on the indication of the first request information, whether a microburst exists on the first transport path, and determines, based on a detection result, whether to enable the newly established second transport path to transmit a packet of a next frame. This addresses transmission delay issues caused by core network bursts in microburst scenarios, and helps prevent out-of-order arrival of data packets, thereby improving user experience.

With reference to the fourth aspect, in some implementations of the fourth aspect, the first request information includes an N4 rule. The user plane function network element detects the last packet of the frame according to the N4 rule, and when detecting the last packet of the frame, triggers detection of a second time difference for the current first transport path, where the second time difference includes transmission delay of the first transport path.

Based on the foregoing technical solution, the first request information includes the N4 rule. The UPF detects the last packet of the frame in the first transport path according to the N4 rule. When the last packet of the frame is detected, detection of the second time difference for the current first transport path is triggered. The second time difference includes transmission delay of the first transport path. This addresses transmission delay issues caused by core network bursts in microburst scenarios, and helps prevent out-of-order arrival of data packets, thereby improving user experience.

With reference to the fourth aspect, in some implementations of the fourth aspect, the first request information includes a second threshold. When the second time difference is greater than or equal to the second threshold, it is determined that a microburst exists on the current first transport path.

Based on the foregoing technical solution, when the first request information received by the UPF carries the second threshold, the UPF detects the second time difference based on the received first request information, and performs determining on the second time difference and the second threshold. This addresses transmission delay issues caused by core network bursts in microburst scenarios, and helps prevent out-of-order arrival of data packets, thereby improving user experience.

With reference to the fourth aspect, in some implementations of the fourth aspect, the method further includes: sending detection result information. The detection result information includes the second time difference, and further indicates the session management function network element to compare the second time difference with the second threshold. When the second time difference is greater than or equal to the second threshold, it is determined that a microburst exists on the current first transport path.

Based on the foregoing technical solution, the UPF sends the detection result information to the SMF, where the detection result information includes the second time difference. The detection result information further indicates the SMF to determine a value relationship between the second time difference and the second threshold. When the second time difference is greater than or equal to the second threshold, it is determined that a microburst exists on the current first transport path.

It should be understood that, in some optional embodiments, after the UPF detects the second time difference, the UPF determines, by determining the value relationship between the second time difference and the second threshold, whether a microburst exists on the current first transport path, and the UPF determines to enable the established second transport path for transmission.

It should be further understood that, in some other optional embodiments, after detecting the second time difference, the UPF reports the detection result information to the SMF. The SMF determines a value relationship between the second time difference and the second threshold, and sends the request information to the UPF when a microburst exists on the current first transport path, indicating the UPF to enable the established second transport path for transmission.

According to a fifth aspect, a communication apparatus is provided. The apparatus is configured to perform the methods provided in the first aspect to the fourth aspect. Specifically, the apparatus may include units and/or modules configured to perform the method according to any one of the implementations of the first aspect to the fourth aspect, for example, a processing unit and/or a communication unit.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is a network element device. When the apparatus is a network element device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network element device. When the apparatus is a chip, a chip system, or a circuit used in a network element device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes a memory, configured to store a program. At least one processor is configured to execute a computer program or instructions stored in the memory, to perform the method according to any one of the implementations of the first aspect to the fourth aspect or the method provided in any one of the implementations of the first aspect to the fourth aspect.

In an implementation, the apparatus is a terminal device.

In another implementation, the apparatus is a chip, a chip system, or a circuit used in a terminal device.

In an implementation, the apparatus is a network element device.

In another implementation, the apparatus is a chip, a chip system, or a circuit used in a network element device.

According to a seventh aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device, and the program code is used to perform the method provided in any one of the foregoing implementations of the first aspect to the fourth aspect.

According to a ninth aspect, a computer program product including instructions is provided. When the computer program product runs on a computer, the computer is enabled to perform the method provided in any one of the implementations of the first aspect to the fourth aspect.

According to a tenth aspect, a chip is provided. The chip includes a processor and a communication interface, and the processor reads, through the communication interface, instructions stored in a memory, to perform the method provided in any one of the implementations of the first aspect to the fourth aspect.

Optionally, in an implementation, the chip further includes the memory. The memory stores a computer program or the instructions, the processor is configured to execute the computer program or the instructions stored in the memory, and when the computer program or the instructions are executed, the processor is configured to perform the method according to any one of the implementations of the first aspect to the fourth aspect.

According to an eleventh aspect, a communication system is provided, including the session function management network element in the first aspect and the access network device in the second aspect.

According to a twelfth aspect, a communication system is provided, including the session function management network element in the third aspect and the user plane function network element in the fourth aspect.

### BRIEF DESCRIPTION OF DRAWINGS

FIG. 1 is a diagram of a network architecture;
FIG. 2 is a diagram of a network architecture in which network optimization is performed based on an ATSSS mechanism according to this application;
FIG. 3 is a schematic flowchart of transmission through a second transport path according to an embodiment of this application;
FIG. 4 is a schematic flowchart of transmission through a heterogeneous path according to an embodiment of this application;
FIG. 5 is a diagram of establishment of a heterogeneous path according to this application;
FIG. 6 is another schematic flowchart of transmission through a heterogeneous path according to an embodiment of this application;
FIG. 7 is another schematic flowchart of transmission through a second transport path according to an embodiment of this application;
FIG. 8 is another schematic flowchart of transmission through a heterogeneous path according to an embodiment of this application;
FIG. 9A and FIG. 9B are another schematic flowchart of transmission through a heterogeneous path according to an embodiment of this application;
FIG. 10 is a block diagram of a communication apparatus 10 according to an embodiment of this application;
FIG. 11 is a diagram of another communication apparatus 20 according to an embodiment of this application; and
FIG. 12 is a diagram of a chip system 30 according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

First, a network architecture applicable to this application is briefly described below.

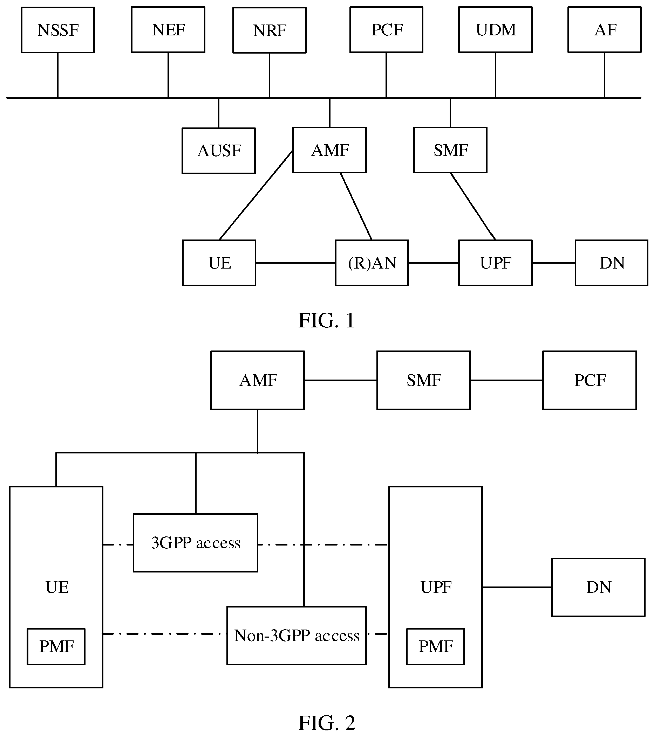

For example, FIG. 1 is a diagram of a network architecture.

As shown in FIG. 1, a 5G system (the 5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the Internet. The NSSF, the AUSF, the UDM, the NEF, the NRF, the PCF, the AF, the AMF, the SMF and the UPF are network elements in a core network (Core Network, CN). Because a 5G system is used as an example in FIG. 1, the core network may be referred to as a 5G core network (5G core network, 5GC or 5GCN).

The following briefly describes the network elements shown in FIG. 1.
1. The UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a wearable device, a terminal device in a 5G network, and a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may alternatively be a terminal device in an IoT system. An IoT is an important constituent part of future development of information technologies. A main technical feature of the IoT is that an article is connected to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be a terminal device, or may be an apparatus that can support the terminal device in implementing the function, for example, a chip system or a chip. The apparatus may be mounted in the terminal device. In embodiments of this application, the chip system may include a chip, or may include a chip and another discrete component.

2. A (radio) access network ((radio) access network, (R)AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. The (R)AN includes one or more access network elements or access network devices, and an interface between the access network device and the terminal device may be a Uu interface (or referred to as an air interface).

It should be understood that in future communication, names of these interfaces may remain unchanged, or may be replaced by other names. This is not limited in this application. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection between the terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding of control signals and user data between the terminal device and the core network.

The AN device may include, for example, but is not limited to, a macro base station, a micro base station (also referred to as a small cell), a radio network controller (radio network controller, RNC), a NodeB (NodeB, NB), a base station controller (base station controller, BSC), a base transceiver station (base transceiver station, BTS), an evolved NodeB (evolved node B, eNB), a next-generation evolved NodeB (next generation eNB, ng-eNB), a home NodeB (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission and reception point (transmission and reception point, TRP), or the like. Alternatively, the AN device may be a gNB or a transmission point (TRP or TP) in a 5G (for example, NR) system, or one antenna panel or a group of antenna panels (including a plurality of antenna panels) of a base station in the 5G system. Alternatively, the AN device may be a network node that forms a gNB or a transmission point, for example, a distributed unit (distributed unit, DU), or a base station in a next-generation communication 6G system. Alternatively, the AN device may be a module or a unit that completes a function of a base station, for example, a central unit (central unit, CU) and a distributed unit (distributed unit, DU). In a possible network structure, the CU may be configured to support communication in protocols such as a radio resource control (radio resource control, RRC) protocol, a packet data convergence protocol (packet data convergence protocol, PDCP), and a service data adaptation protocol (service data adaptation protocol, SDAP). The DU may be configured to support communication in a radio link control (radio link control, RLC) layer protocol, a medium access control (medium access control, MAC) layer protocol, and a physical layer protocol. A specific technology used by the AN device and a specific device form of the AN device are not limited in embodiments of this application.

It should be noted that, in this application, a satellite may serve as a RAN, that is, the terminal device may communicate with a core network side via the satellite. For example, satellite communication is used to resolve a coverage problem in a remote area like a mountainous area or an ocean. This mode is called satellite communication in a regenerative mode. Alternatively, the satellite may be used only as a radio frequency unit, that is, a RAN function is still performed by a terrestrial base station. This is also an implementation of satellite communication, and this mode is referred to as satellite communication in a transparent mode.
3. The AMF is mainly for functions such as access control, mobility management, and attachment and detachment. The AMF may be configured to manage access control and mobility of the terminal device. During actual application, the AMF includes a mobility management function in a mobility management entity (mobility management entity, MME) in an LTE network framework, and includes an access management function. The AMF may specifically be responsible for registration of the terminal device, mobility management, a tracking area update procedure, reachability detection, selection of a session management function network element, mobility status transition management, and the like.
4. The SMF is mainly used for user plane network element selection, user plane network element redirection, internet protocol (internet protocol, IP) address assignment for the terminal device, session establishment, modification, and release, and QoS control.
5. The UPF is mainly used for receiving and forwarding user plane data. For example, the UPF may receive user plane data from the DN, and send the user plane data to a terminal device via the AN device. The UPF may alternatively receive user plane data from the terminal device via the AN device, and forward the user plane data to the DN.
6. The NEF is mainly used for securely exposing, to the outside, a service, a capability, and the like that are provided by a 3GPP network function.
7. The PCF is mainly configured to provide guidance on a unified policy framework for network behavior, provide policy rule information for a control plane network element (for example, an AMF or an SMF), and is responsible for obtaining user subscription information related to policy decision-making.

For example, the PCF network element may be divided into two PCFs with different functions: a UE-PCF and an AM-PCF. The UE-PCF may be configured to generate a UE policy (UE policy), that is, a policy sent to the UE. A sending path is from the UE-PCF to the AMF and then to the UE. In this case, the AMF network element does not parse content of the UE policy, that is, the AMF transparently transmits the UE policy. The AM-PCF may be configured to generate an AM policy, that is, a policy that is sent to the AMF and that is used for access management, and a sending path is from the UE-PCF to the AMF. Further, the AMF may further send some or all access management policies to the RAN.
8. The AF is mainly configured to provide a service for a 3GPP network, for example, interact with a PCF to perform policy control or provide some third-party services for a network side.
9. The network slice selection function (network slice selection function, NSSF) is mainly used for network slice selection.
10. The UDM is mainly used for subscription data management of UE, including storage and management of a UE identifier, access authorization of the UE, and the like.
11. The DN is an operator network mainly used for providing a data service for UE, for example, the Internet (Internet), a third-party service network, or an IP multimedia service (IP multimedia service, IMS) network. The DN is identified by a data network name (data network name, DNN) in a 5G network. The terminal device may access the DN through a protocol data unit (protocol data unit, PDU) session established between the terminal device and the DN.
12. The AUSF is mainly used for user authentication and the like.
13. The NRF is mainly used for storing a network functional entity, description information of a service provided by the network functional entity, and the like.

In the network architecture shown in FIG. 1, the network elements may communicate with each other through interfaces. For example, the UE is connected to the AN device according to the radio resource control (radio resource control, RRC) protocol, and the UE communicates with the AN device through a Uu interface.

It should be understood that the network architecture shown above is merely an example for description, and the network architecture applicable to embodiments of this application is not limited thereto. Any network architecture that can implement functions of the network elements is applicable to embodiments of this application.

It should be further understood that, although not shown in FIG. 1, the CN may further include other possible network elements, such as a unified data repository (unified data repository, UDR), a short message service function (short message service function, SMSF) network element, and an authentication service function (authentication server function, AUSF) network element. The UDR is configured to store user information and subscription information. The user information may be understood as identification information of the terminal device, for example, a permanent identifier of the terminal device.

It should be further understood that the functions or the network elements, such as the AMF, the SMF, the UPF, the PCF, the UDM, the NSSF, and the AUSF shown in FIG. 1 may be understood as network elements configured to implement different functions, and for example, may be combined into a network slice based on a requirement. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

The foregoing briefly describes basic concepts in this application, and details are not described in the following embodiments.

In addition, the following descriptions are first provided to facilitate understanding of embodiments of this application.

First, in this application, "indicate" may include "directly indicate" and "indirectly indicate". When a piece of indication information indicates A, the indication information may directly indicate A or indirectly indicate A, but this does not mean that the indication information necessarily carries A.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "S510" are merely identifiers for ease of description, and do not limit a sequence of performing steps.

Third, in embodiments of this application, a word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, in embodiments of this application, "of (of)", "corresponding/relevant (corresponding/relevant)", "corresponding (corresponding)", and "associated (associate)" may be interchangeably used sometimes. It should be noted that expressed meanings are consistent when no difference between the terms is emphasized.

Fifth, in embodiments of this application, "in a case of", "when", and "if" may be used interchangeably sometimes. It should be noted that expressed meanings are consistent when differences are not emphasized.

Sixth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, and describes basic concepts that may be used in embodiments of this application.

In a case of a microburst of a media service flow, network optimization is usually performed based on an access traffic steering, switching, and splitting (access traffic steering, switching and splitting, ATSSS) mechanism, addressing transmission delay issues caused by core network bursts.

FIG. 2 is a diagram of a network architecture in which network optimization is performed based on the ATSSS mechanism according to this application. In the figure, the ATSSS establishes a dual-channel transmission capability between UE and a UPF, and can combine a fixed network and radio resources, to meet a requirement of a high-bandwidth service. Multi-access traffic splitting scheduling control is implemented between the UE and the UPF based on a traffic splitting policy delivered by a control plane. Four traffic splitting modes are defined, including:
Mode 1: A service flow is transmitted on an activated path. That is, in 3GPP access and non-3GPP access, the activated path is selected for data transmission.
Mode 2: A service flow is transmitted on a path with lowest delay. That is, the path with the lowest delay is selected for data transmission based on measured delays of the 3GPP access and the non-3GPP access.
Mode 3: Load balancing, and equal and weighted distribution among access networks is ensured after traffic splitting during transmission. To be specific, transmitted data packets are split, to ensure that equal and weighted distribution of data flows transmitted on paths of the 3GPP access and the non-3GPP access is balanced.
Mode 4: Traffic splitting is performed on service flows based on priorities. To be specific, priorities of the 3GPP access and the non-3GPP access are configured in advance, and then traffic splitting is performed on the service flows based on a current access status and current priorities.

It should be understood that round trip time delay (round trip time delay, RTT) between the UE and the IPF may be measured between the UE and the UPF based on a performance measurement function (performance measurement function, PMF), to assist in access point switching.

In conclusion, it can be learned that in ATSSS-based network optimization, in a scenario in which a single path is selected for data transmission, if transmission quality of the selected path deteriorates or a microburst of a service flow occurs, problems such as transmission delay and transmission interruption may be caused. In a scenario in which data is transmitted through traffic splitting, data packets may arrive out of order, which causes head-of-line blocking (head-of-line blocking, HOL blocking) and increases a buffer processing delay. Such a delay and out-of-order arrival of packets are unfavorable to transmission of the media service flow, and cannot meet a requirement of the media service flow for a low delay, which affects user experience.

This application provides a communication method to address transmission delay issues caused by core network bursts in microburst scenarios of media service flows. It helps prevent out-of-order arrival of data packets, thereby improving user experience.

The following describes the technical solutions provided in this application in detail with reference to accompanying drawings. Embodiments of this application may be applied to a plurality of different scenarios, including but not limited to the scenario shown in FIG. 1.

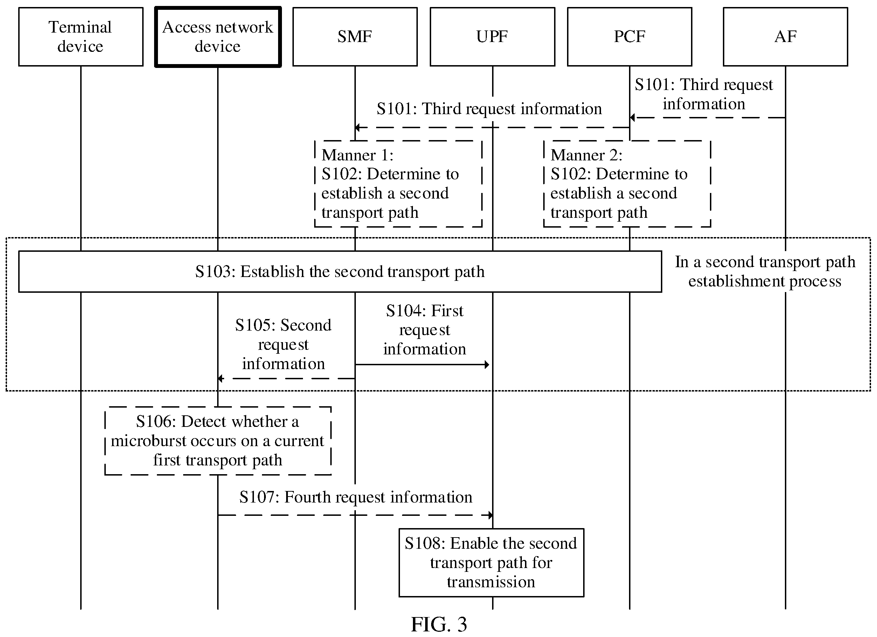

Without loss of generality, in FIG. 3, interaction between a terminal device and a network device is used as an example to describe in detail the communication method provided in embodiments of this application. The network device includes an access network device and a core network device.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the method provided in embodiments of this application may be performed by a terminal device and a network device, or a chip or a circuit in the terminal device and the network device, or a functional module that can invoke and execute a program in the terminal device and the network device.

FIG. 3 is a schematic flowchart of transmission through a second transport path according to an embodiment of this application.

The communication method includes the following steps.

S103: An SMF establishes a second transport path. The second transport path includes at least one transport path between the terminal device and the core network device.

In another implementation of S103, an execution body may be a PCF, and the PCF establishes the second transport path. The second transport path includes the at least one transport path between the terminal device and the core network device.

In an implementation, S103 is performed by the SMF, and the SMF triggers UE, a RAN, and a UPF to establish a new second transport path.

In another implementation, S103 is performed by the PCF. The PCF indicates the SMF side to establish a new second transport path, and then the SMF interacts with the UE/RAN/UPF to establish the new second transport path.

It should be understood that the second transport path includes at least one newly established transport path between the current terminal device and the core network device. In some optional embodiments, the second transport path is also referred to as a heterogeneous path. The second transport path may be a new transport path between the terminal device and the core network device. For example, there are new transport paths between the terminal device and the access network device and between the access network device and a user plane function network element. Alternatively, only some links are new transport paths. For example, a same transport path is used between the terminal device and the access network device, and a new transport path is used between the access network device and the user plane function network element.

S104: The SMF sends first request information to the UPF. The first request information indicates the user plane function network element to enable, when a microburst exists on a current first transport path, the established second transport path to transmit a packet of a next frame, or indicates to enable the established second transport path to transmit a packet of a next frame when the user plane function network element receives a fourth request message from the RAN side.

The UPF receives the first request information.

It should be understood that the microburst means that a large quantity of data packets arrive in a very short time, and a transmission congestion problem may be caused.

S108: The UPF enables the second transport path to transmit a packet of a next frame.

Optionally, the communication method may further include the following step:
S101: The SMF receives third request information. The third request information carries first indication information indicating to establish the second transport path.

It should be understood that, that the SMF receives the third request information may be specifically receiving the third request information forwarded by the PCF, or may be receiving, by the SMF, the third request information sent by the AF.

In an optional implementation, the first indication information indicates that a service currently being transmitted has a requirement for path switching, or indicates that a service currently being transmitted has a requirement for quality of service adjustment.

S102: Determine to establish the second transport path. Specifically, two manners are included.

Manner 1: The SMF determines, based on the first indication information or based on local configuration information, to establish the second transport path.

Manner 2: The PCF triggers, based on the first indication information or based on local configuration information, to determine to establish the second transport path.

S105: The SMF sends second request information to the access network device. The second request information indicates the access network device to detect whether a microburst exists on the current first transport path.

S106: The access network device detects, based on the second request information, whether a microburst exists on the current first transport path.

In an optional implementation, the second request information includes second indication information. The second indication information indicates the access network device to send fourth request information when determining that a first time difference is greater than or equal to a first threshold. The first time difference includes a time difference between arrival of a last packet of a current frame and arrival of a first packet of a next frame. The fourth request information indicates the user plane function network element to enable the established second transport path for transmission.

In an optional implementation, the second request information further includes the first threshold.

In an optional implementation, the first request information includes an N4 rule. When the user plane function network element receives third indication information, the user plane function network element enables, according to the N4 rule, the established second transport path to transmit a packet of a next frame. The third indication information is carried in the fourth request information.

S107: The access network device sends the fourth request information to the UPF device. When detecting that a microburst exists on the current first transport path, the access network device sends the fourth request information to the UPF.

It should be understood that the fourth request information carries the third indication information, and the UPF enables the second transport path for transmission according to the N4 rule and the third indication information.

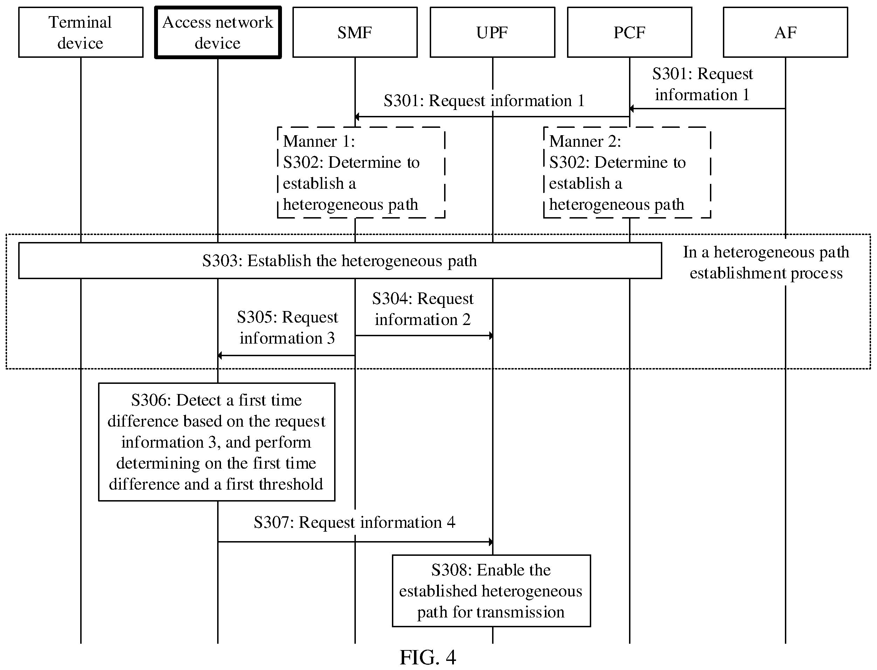

The following describes specific implementations with reference to FIG. 4 to FIG. 6. It should be understood that FIG. 4 to FIG. 6 are merely possible implementations provided in this application, and do not constitute any limitation on the protection scope of this application.

FIG. 4 is a schematic flowchart of transmission through a heterogeneous path according to an embodiment of this application.

The communication method includes the following steps.

S301: An AF sends request information 1 to an SMF. The request information 1 includes service description (traffic description) information and indication information 1. The service description information indicates a current media service. The indication information 1 indicates that the media service has a requirement for path switching, or indicates that the media service has a QoS adjustment requirement.

It should be understood that the request information 1 is a specific implementation of the third request information in the embodiment shown in FIG. 3. This is not specially limited in this application.

It should be understood that the indication information 1 is a specific implementation of the first indication information in the embodiment shown in FIG. 3. This is not specially limited in this application.

In an optional implementation, the service description information includes but is not limited to an IP 5-tuple, an IP 3-tuple, a data network name (data network name, DNN), single network slice selection assistance information (single network slice selection assistance information, S-NSSAI), or the like. This is not specially limited in this application.

It should be understood that a specific manner in which the AF sends the request information 1 to the SMF includes: The AF sends the request information 1 to the SMF through a PCF, or the AF sends the request information 1 to the SMF through an NEF and a PCF.

S302: Determine, based on the received request information 1, to establish a heterogeneous path.

Step S302 may be performed by the SMF or the PCF.

Manner 1: S302 is performed by the SMF.

In an implementation, the SMF determines, based on the service description information carried in the request information 1 and a local configuration policy, to establish the heterogeneous path.

In another implementation, the SMF determines or triggers establishment of the heterogeneous path based on the indication information 1 carried in the request information 1.

Optionally, the SMF first determines, based on the indication information 1, that the media service has a requirement for path switching or a QoS adjustment requirement, and then determines or triggers establishment of the heterogeneous path.

Manner 2: S302 is performed by the PCF.

In an implementation, the PCF determines, based on the service description information carried in the request information 1 and a local configuration policy, to establish the heterogeneous path.

In another implementation, the PCF determines or triggers establishment of the heterogeneous path based on the indication information 1 carried in the request information 1.

Optionally, the PCF first determines, based on the indication information 1, that the media service has a requirement for path switching or a QoS adjustment requirement, and then determines or triggers establishment of the heterogeneous path.

S303: Establish the heterogeneous path.

It should be understood that, with reference to step S302, establishment of a heterogeneous path may be triggered by the SMF or the PCF. The SMF or the PCF triggers establishment of the heterogeneous path among a terminal device, an access network device, and a UPF.

It should be understood that the heterogeneous path is a specific implementation of the second transport path in the embodiment shown in FIG. 3. This is not specially limited in this application.

In an optional implementation, the SMF triggers establishment of a heterogeneous path, triggering a UE, a RAN, and the UPF to establish a new heterogeneous path.

In another optional implementation, the PCF triggers establishment of a heterogeneous path, by indicating the SMF side, which then interacts with the UE/RAN/UPF to establish a new heterogeneous path.

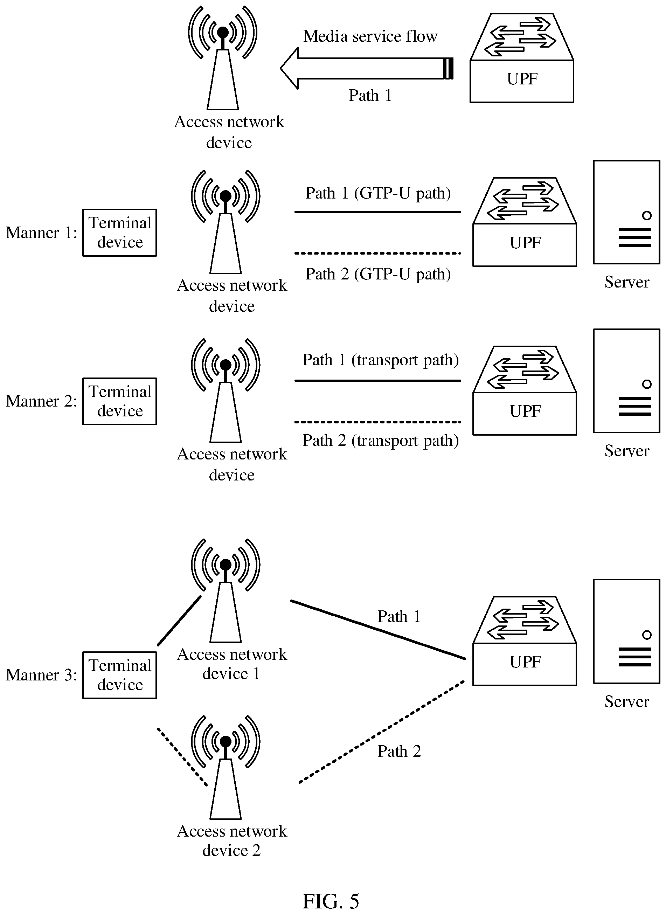

It should be understood that the access network device includes an AN device and a RAN device. For brevity, the RAN is used as an example to describe establishment of the heterogeneous path, and this does not constitute any limitation on the protection scope of this application. The following describes establishment of a heterogeneous path among the UE, the RAN, and the UPF with reference to FIG. 5.

FIG. 5 is a diagram of establishment of a heterogeneous path according to this application.

When the UPF transmits a media service flow to the access network device through an existing path (a path 1), and a trigger is received from the SMF or the PCF to establish a heterogeneous path, a new heterogeneous path (a path 2) may be established using one of the following three manners within a bearer network among the terminal device, the access network device, and the UPF.

Manner 1: Establish a new general packet radio service tunneling protocol-user plane path (general packet radio service tunneling protocol-user plane path, GTP-U path), namely, the path 2, between the access network device and the UPF.

Manner 2: Establish a new transport path (transport path), namely, the path 2, between the access network device and the UPF.

Manner 3: Trigger the terminal device to establish a path from the terminal device to another access network device and then to the UPF. As shown in the figure, trigger the UE terminal device to establish a new path, namely, the path 2, from the terminal device to an access network device 2 and then to the UPF.

It should be understood that a specific transport path selected by the SMF/PCF depends on implementation on the SMF side. This is not limited herein.

In an implementation, the SMF or the PCF sends indication information to the terminal device, where the indication information is used to trigger the terminal device to establish a new transport path.

It should be understood that the transport path between the terminal device and the access network device 2 may be based on non-3GPP access technology or 3GPP access technology. This is not specially limited in this application.

In another implementation, step S303 is not performed first. Instead, after S306, when the SMF receives a notification from the access network device or the UPF about a microburst, a heterogeneous path establishment procedure is triggered.

It should be understood that the path 1 is a specific implementation of the first transport path in the embodiment shown in FIG. 3. This is not specially limited in this application.

It should be understood that the path 2 is a specific implementation of the second transport path in the embodiment shown in FIG. 3. This is not specially limited in this application.

S304: The SMF sends request information 2 to the UPF.

In an implementation, the request information 2 includes a trigger indication indicating the UPF to enable a new heterogeneous path to transmit a packet.

In another implementation, the request information 2 includes an N4 rule. Optionally, the trigger indication is included in the N4 rule.

It should be understood that the request information 2 is a specific implementation of the first request information in the embodiment shown in FIG. 3. This is not specially limited in this application.

In an implementation, the trigger indication indicates the UPF to enable a new heterogeneous path to transmit a packet of a next frame when the UPF receives indication information 2 sent by the access network device.

In an implementation, the indication information 2 indicates that a microburst occurs in the bearer network, so that the UPF enables a new heterogeneous path to transmit the packet because the microburst occurs in the bearer network.

In another implementation, the indication information 2 directly indicates the UPF to enable the new path to transmit the packet.

It should be understood that transmitting the packet includes transmitting a packet corresponding to a next frame of the media service flow. In other words, when a transport path is switched, transmission starts from a new frame of packet.

It should be understood that the indication information 2 is a specific implementation of the third indication information in the embodiment shown in FIG. 3. This is not specially limited in this application.

S305: The SMF sends request information 3 to the access network device.

The request information 3 includes indication information 3 and/or indication information 4. The indication information 3 indicates the access network device to detect a first time difference, and the first time difference includes a time difference between arrival of a last packet of a current frame and arrival of a first packet of a next frame. The indication information 4 indicates the access network device to send a request information 4 to the UPF when the first time difference detected by the access network device is greater than or equal to a first threshold.

It should be understood that the request information 3 is a specific implementation of the second request information in the embodiment shown in FIG. 3. This is not specially limited in this application.

It should be understood that the indication information 4 is a specific implementation of the second indication information in the embodiment shown in FIG. 3. This is not specially limited in this application.

In an implementation, the SMF further sends the first threshold to the access network device, where the first threshold indicates a threshold of the first time difference. The threshold includes a frame rate of a media service packet.

In a non-limiting embodiment, when the frame rate of the media service packet is 60 frames/second, the first threshold is 1/60=16.67 ms. It is assumed that the access network device detects that the time difference between arrival of the last packet of the current frame and arrival of the first packet of the next frame or a time difference between arrival of the first packet of the current frame and arrival of the first packet of the next frame is 18 ms. In other words, the access network device determines that the first time difference is greater than the first threshold. In this case, the access network device sends the request information 4 to the UPF based on the indication information 4.

It should be understood that the request information 4 is a specific implementation of the fourth request information in the embodiment shown in FIG. 3. This is not specially limited in this application.

It should be understood that the first threshold sent by the SMF to the access network device is carried in the request information 3 for sending, and the first threshold may be specifically carried in the indication information 3 and/or the indication information 4. This is not specially limited in this application.

In an implementation, if the first threshold has been configured in a local configuration of the access network device, the SMF does not need to send the first threshold to the access network device again.

It should be understood that step S304 and step S305 are performed in a heterogeneous path establishment process.

S306: The access network device performs microburst monitoring based on the request information 3.

The access network device detects the first time difference based on the indication information 3 carried in the request information 3. The access network device determines, based on the indication information 4 carried in the request information 3, a value relationship between the first time difference and the first threshold, to determine whether a microburst exists. When detecting that the first time difference is greater than or equal to the first threshold, the access network device sends the request information 4 to the UPF. In other words, a microburst exists in this case.

S307: The access network device sends the request information 4 to the UPF. The request information 4 carries the indication information 2.

Specifically, the access network device may carry the request information 4 in a GTP-U layer of an uplink data packet or a null data packet, and send the request information 4 to the UPF side. Alternatively, the access network device sends the request information 4 to the UPF side via an AMF/SMF.

The indication information 2 indicates the UPF to perform heterogeneous path switching. To be specific, the UPF enables, based on the indication information 2, the heterogeneous path to transmit a packet of a next frame.

In an implementation, the indication information 2 indicates that a microburst occurs.

S308: The UPF enables, based on the request information 4, the established heterogeneous path for transmission.

When the UPF receives the request information 4, because the request information 4 carries the indication information 2, the UPF enables, according to the N4 rule received in S304, the new heterogeneous path to transmit the packet.

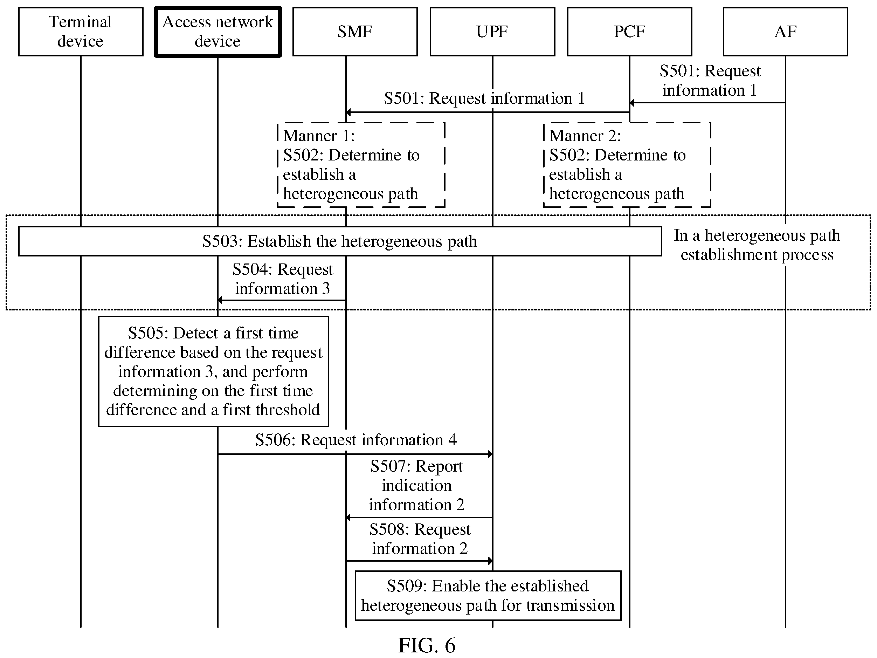

In an implementation, step S304 is not performed. To be specific, the SMF does not send, to the UPF in a heterogeneous path establishment process, the request information 2 carrying the N4 rule. In this case, another step indicating the UPF to enable the established heterogeneous path for transmission should be further included between S307 and S308. The following provides detailed descriptions with reference to FIG. 6.

FIG. 6 is another schematic flowchart of transmission through a heterogeneous path according to an embodiment of this application.

S501: An AF sends request information 1 to an SMF. A specific process is similar to S301, and details are not described herein again in this application.

S502: Determine, based on the received request information 1, to establish a heterogeneous path. A specific process is similar to S302, and details are not described herein again in this application.

S503: Establish the heterogeneous path. A specific process is similar to that in S303. A difference lies in that, in an implementation, step S503 is not performed first. After the SMF receives a notification from a UPF that a microburst exists in S507, a heterogeneous path establishment procedure is triggered. Alternatively, after step S506, an access network device indicates the SMF that a microburst exists currently, and the SMF is triggered to establish the heterogeneous transport path.

S504: The SMF sends request information 3 to the access network device. A specific process is similar to S305, and details are not described herein again in this application.

S505: The access network device detects a first time difference based on the request information 3, and performs determining on the first time difference and a first threshold. A specific process is similar to S306, and details are not described herein again in this application.

S506: The access network device sends request information 4 to the UPF. A specific process is similar to S307, and details are not described herein again in this application.

S507: The UPF reports indication information 2 to the SMF.

Compared with the embodiment described in FIG. 4, in a heterogeneous path establishment process, the SMF does not send an N4 rule to the UPF, that is, the SMF does not indicate the UPF to enable a new path to transmit a packet when receiving the indication information 2. Therefore, in S506, after receiving the request information 4 that carries the indication information 2, the UPF cannot trigger to enable a new heterogeneous path because there is no N4 rule. Therefore, the UPF reports the received indication information 2 to the SMF.

S508: The SMF sends request information 2 to the UPF.

Optionally, the request information 2 includes a trigger indication indicating the UPF to enable a new heterogeneous path to transmit a packet.

In an implementation, the N4 rule includes the trigger indication information, indicating the UPF to enable the new heterogeneous path to transmit the packet when the UPF receives the indication information 2 sent by the access network device.

In an implementation, the indication information 2 indicates that a microburst occurs in a bearer network, so that the UPF enables a new heterogeneous path to transmit the packet because the microburst occurs in the bearer network.

In another implementation, the indication information 2 directly indicates the UPF to enable the new path to transmit the packet.

It should be understood that transmitting the packet includes transmitting a packet corresponding to a next frame of a media service flow.

S509: The UPF enables the established heterogeneous path for transmission.

The UPF enables the established heterogeneous path for transmission based on the received request information 4 and the received request information 2. The UPF enables the new heterogeneous path to transmit a packet according to the N4 rule in the received request information 2 and the indication information 2 in the received request information 4.

In the foregoing embodiments disclosed in FIG. 4 to FIG. 6, the access network device detects whether a microburst occurs in the bearer network, and the access network device notifies the UPF, so that the UPF can enable a new path to transmit a media packet, thereby avoiding an increase in a media packet transmission delay caused by the microburst in the bearer network.

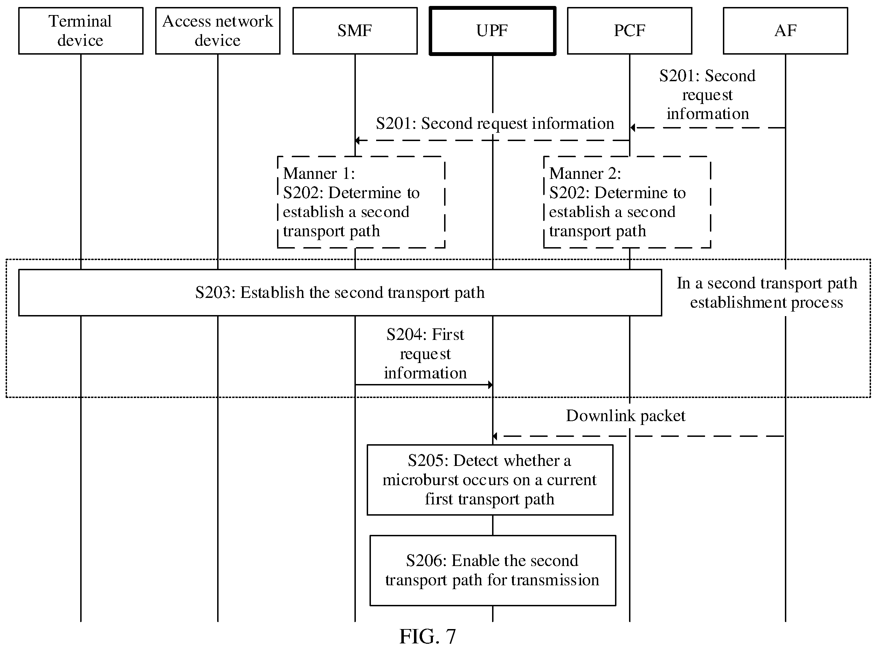

In another implementation, the UPF may further detect whether a microburst occurs in the bearer network, to enable a new path to transmit a media packet. Another embodiment is described below with reference to FIG. 7.

FIG. 7 is another schematic flowchart of transmission through a second transport path according to an embodiment of this application.

The communication method includes the following steps.

S203: Establish a second transport path. The second transport path includes at least one transport path between a terminal device and a core network device.

In another implementation of S203, an execution body may be a PCF, and the PCF establishes the second transport path. The second transport path includes the at least one transport path between the terminal device and the core network device.

S204: The SMF sends first request information to a UPF.

In an implementation, the first request information includes indication information indicating the UPF to perform microburst monitoring.

In another implementation, the first request information indicates a user plane function network element to detect whether a microburst exists on a current first transport path. When a microburst exists, the established second transport path is enabled to transmit a packet of a next frame.

The UPF receives the first request information.

S205: The UPF detects whether a microburst exists on the current first transport path.

S206: The UPF enables the second transport path to transmit a packet of a next frame.

Optionally, the communication method may further include the following step:
S201: Receive second request information. The second request information carries first indication information indicating to establish the second transport path.

It should be understood that, that the SMF receives the second request information includes receiving the second request information forwarded by the PCF, and further includes that the SMF receives the second request information sent by an AF.

In an optional implementation, the first indication information indicates that a service currently being transmitted has a requirement for path switching, or indicates that a service currently being transmitted has a requirement for quality of service adjustment.

S202: Determine the second transport path. Specifically, two manners are included.

Manner 1: The SMF determines, based on the first indication information or based on local configuration information, to establish the second transport path.

Manner 2: The PCF determines, based on the first indication information or based on local configuration information, to establish the second transport path.

In an optional implementation, the first request information includes an N4 rule. The user plane function network element detects a last packet of of the frame according to the N4 rule. When the last packet of the frame is detected, detection of a second time difference for the current first transport path is triggered. The second time difference includes transmission delay of the first transport path.

In an optional implementation, the first request information includes a second threshold. When the second time difference is greater than or equal to the second threshold, it is determined that a microburst exists on the current first transport path.

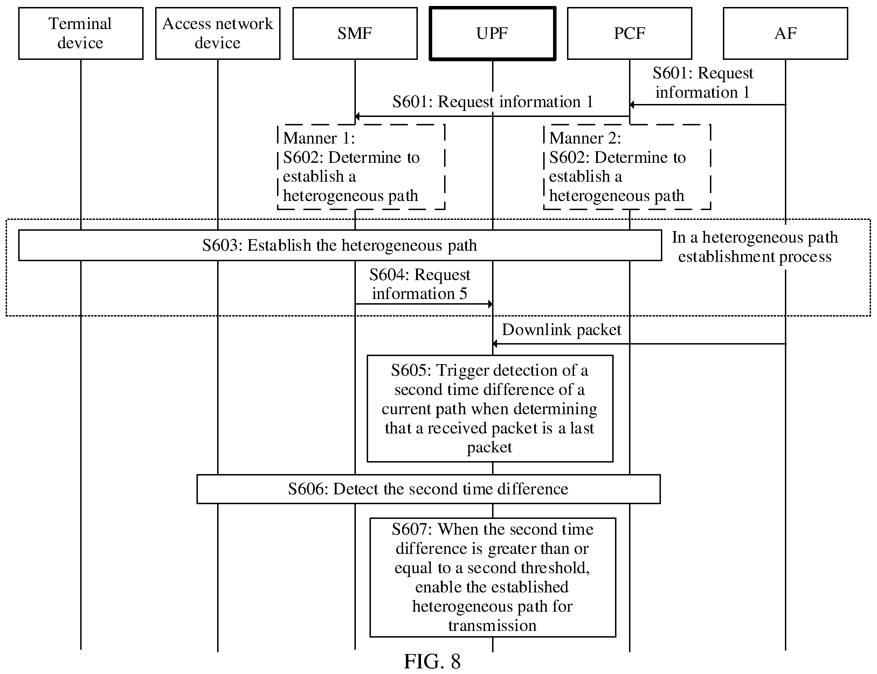

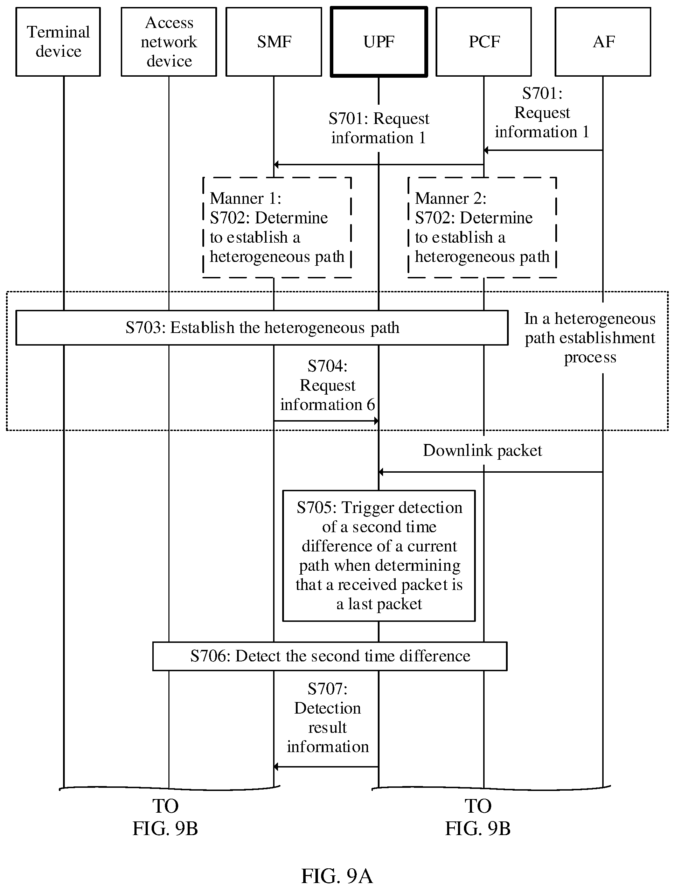

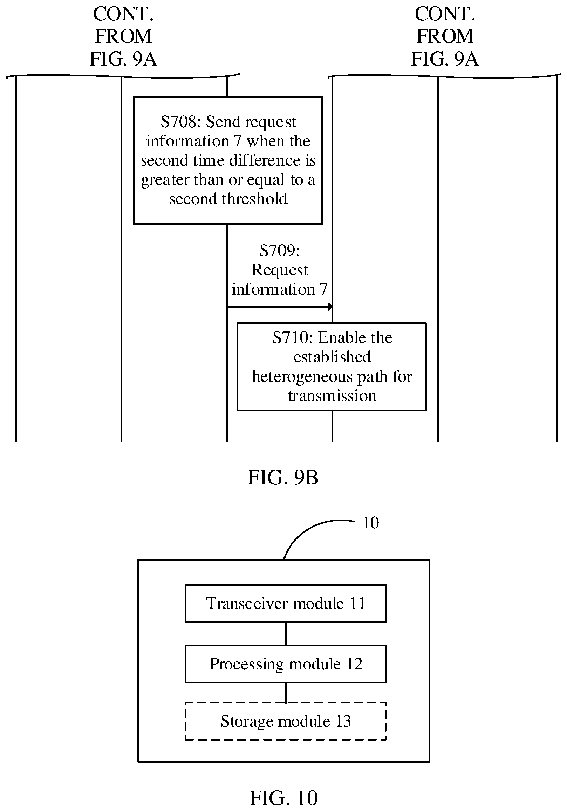

The following describes specific implementations with reference to FIG. 8 and FIG. 9A and FIG. 9B. It should be understood that FIG. 8 and FIG. 9A and FIG. 9B are merely possible implementations provided in this application, and do not constitute any limitation on the protection scope of this application.

FIG. 8 is another schematic flowchart of transmission through a heterogeneous path according to an embodiment of this application.

S601: An AF sends request information 1 to an SMF. A specific process is similar to S301, and details are not described herein again in this application.

It should be understood that the request information 1 is a specific implementation of second request information in the embodiment shown in FIG. 7. This is not specially limited in this application.

S602: Determine, based on the received request information 1, to establish a heterogeneous path. A specific process is similar to S302, and details are not described herein again in this application.

S603: Establish the heterogeneous path. A specific process is similar to S303, and details are not described herein again in this application.

S604: The SMF sends request information 5 to a UPF.

The request information 5 includes indication information indicating the UPF to perform microburst monitoring.

In an implementation, the request information 5 includes an N4 rule, and the N4 rule may include the indication information.

In another implementation, the indication information indicating the UPF to perform microburst monitoring may also indicate the UPF to trigger measurement of a second time difference on a current path, and compare the second time difference with a second threshold, to determine whether a microburst occurs.

It should be understood that the request information 5 is a specific implementation of the first request information in the embodiment shown in FIG. 7. This is not specially limited in this application.

In an implementation, the SMF determines a service type based on service description information carried in the received request information 1, and sends the request information 5 to the UPF. The request information 5 indicates the UPF to trigger, for a media service packet, detection of the second time difference on the current path when it is detected that a last packet arrives, to determine whether a microburst occurs.

In an implementation, the second time difference includes delay information of the current path.

In an implementation, the N4 rule carried in the request information 5 further indicates the UPF to enable the established heterogeneous path to transmit a media packet.

In another implementation, the request information 5 further carries the second threshold, indicating the UPF to perform determining on the measured second time difference and the second threshold. When the second time difference is greater than or equal to the second threshold, the established heterogeneous path is enabled to transmit the media packet.

In an implementation, the second threshold is preconfigured on the UPF side.

For example, steps S605 to S607 are an implementation in which the UPF monitors the microburst.

S605: The UPF receives a downlink packet of the media service, and triggers measurement of the second time difference on the current path.

Specifically, when determining that the received packet is a last packet, the UPF triggers measurement of the second time difference on the current path.

S606: Detect the second time difference. The UPF detects the second time difference of the current path.

In an implementation, the second time difference includes the delay information of the current path, and the UPF measures delay of the current path according to a QoS monitoring mechanism, that is, measures path delay information by adding a timestamp to a packet, to complete detection of the second time difference.

In another implementation, the second time difference includes the delay information of the current path, and the UPF measures the delay of the current path according to a PMF protocol, to complete detection of the second time difference.

It should be understood that the UPF may alternatively complete measurement of the current path delay information in another manner, to complete measurement of the second time difference. The implementation described in this application is merely a most preferred implementation, and does not constitute a specific limitation on the protection scope of this application. In addition, it should be further understood that the path delay information measurement completed by using another method should also fall within the protection scope of the technical solutions of this application. Examples are not listed one by one herein in this application.

S607: When the second time difference is greater than or equal to the second threshold, the UPF determines that the current transport path has a microburst, and enables the established heterogeneous path for transmission.

In an implementation, the UPF performs determining on a value relationship between the measured second time difference and the second threshold carried in the received request information 5. When the second time difference is greater than or equal to the second threshold, the UPF enables the established heterogeneous path for transmission.

In another implementation, the request information 5 sent in step S604 does not include indication information for comparing the measured second time difference with the second threshold; or the request information 5 sent in step S604 does not include trigger information for indicating the UPF to enable the established heterogeneous path for transmission. In this case, based on the embodiment shown in FIG. 8, the method further includes: The UPF reports a detection result of the second time difference, the SMF performs determining on the value relationship between the second time difference and the second threshold, and then the SMF sends, to the UPF, the trigger information for enabling the established heterogeneous path for transmission. The following provides detailed descriptions with reference to FIG. 9A and FIG. 9B.

FIG. 9A and FIG. 9B are another schematic flowchart of transmission through a heterogeneous path according to an embodiment of this application.

S701: An AF sends request information 1 to an SMF. A specific process is similar to S601, and details are not described herein again in this application.

S702: Determine, based on the received request information 1, to establish a heterogeneous path. A specific process is similar to S602, and details are not described herein again in this application.

S703: Establish the heterogeneous path. A specific process is similar to S603, and details are not described herein again in this application.

S704: The SMF sends request information 6 to a UPF.

The request information 6 includes an N4 rule, and the N4 rule indicates the UPF to trigger measurement of a second time difference on a current path.

It should be understood that the request information 6 is a specific implementation of the first request information in the embodiment shown in FIG. 7. This is not specially limited in this application.

In an implementation, the SMF sends the request information 6 to the UPF based on the received request information 1. The request information 6 indicates the UPF to trigger, for a media service packet, detection of the second time difference on the current path when it is detected that a last packet arrives.

In an implementation, the second time difference includes delay information of the current path.

S705: The UPF receives a downlink packet of the media service, and when determining that the received packet is a last packet, the UPF triggers measurement of the second time difference on the current path.

S706: Detect the second time difference. The UPF detects the second time difference of the current path. A specific process is similar to S606. Details are not described herein again in this application.

S707: Report detection result information. The UPF reports detected information about the second time difference to the SMF, and indicates the SMF to perform determining on the second time difference and a second threshold.

S708: Send request information 7 when the second time difference is greater than or equal to the second threshold. The SMF performs determining on the received second time difference information and a value of the second threshold. When the second time difference is greater than or equal to the second threshold, the SMF sends the request information 7 to the UPF.

S709: The SMF sends the request information 7 to the UPF. The request information 7 includes indication information indicating the UPF to enable the established heterogeneous path for packet transmission.

S710: The UPF enables the established heterogeneous path for transmission.

In the embodiments disclosed in FIG. 8 and FIG. 9A and FIG. 9B, the UPF detects whether a microburst occurs in a bearer network, to enable a new path to transmit a media packet, thereby avoiding an increase in a media packet transmission delay caused by the microburst in the bearer network.

It should be understood that sequence numbers of the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by devices (for example, a terminal device, an access network device, and a core network device) may also be implemented by components (for example, a chip or a circuit) that can be used in the devices.

It may be further understood that, in embodiments of this application, interaction between the terminal device, the access network device, and the core network device (which may also be referred to as a core network element) is mainly used as an example for description. This application is not limited thereto. A satellite may be replaced with a transmit end device, and the terminal device may be replaced with a receive end device.

It may be further understood that some optional features in embodiments of this application may not depend on another feature in some scenarios, or may be combined with another feature in some scenarios. This is not limited.

The foregoing describes in detail the communication methods provided in embodiments of this application with reference to FIG. 4 to FIG. 9A and FIG. 9B. The foregoing communication methods are mainly described from a perspective of interaction between the terminal device, the access network device, and the core network device. It may be understood that, to implement the foregoing functions, the terminal device, the access network device, and the core network device include corresponding hardware structures and/or software modules for performing the functions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The following describes in detail a communication apparatus provided in embodiments of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, the terminal device, the access network device, and the core network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 10 is a block diagram of a communication apparatus 10 according to an embodiment of this application. The apparatus 10 includes a transceiver module 11 and a processing module 12.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a possible design, the apparatus 10 may correspond to the terminal device in the foregoing method embodiments, or may be a component (for example, a chip) of the terminal device.

Correspondingly, the apparatus 10 may implement steps or procedures performed by the terminal device in the foregoing method embodiments. Specifically, the transceiver module 11 may be configured to perform operations related to sending and receiving of the terminal device in the foregoing method embodiments, and the processing module 12 may be configured to perform operations related to processing of the terminal device in the foregoing method embodiments.

In a possible implementation, the transceiver module 11 is configured to obtain information for establishing a heterogeneous path, where the information for establishing the heterogeneous path indicates establishment of the heterogeneous path; and the processing module 12 is configured to establish at least one transport path between a terminal device and a core network device based on the information for establishing the heterogeneous path.

It should be understood that a specific process in which the units perform the foregoing corresponding steps is described in detail in the foregoing method embodiments. For brevity, details are not described herein.

In another possible design, the apparatus 10 may correspond to the access network device in the foregoing method embodiments, or may be a component (for example, a chip) of the access network device.

Correspondingly, the apparatus 10 may implement steps or procedures performed by the access network device in the foregoing method embodiments.

In a possible implementation, the processing module 12 is configured to detect a time difference between arrival of a last packet of a current frame and arrival of a first packet of a next frame, that is, configured to detect a first time difference, is further configured to determine a value relationship between the first time difference and a first threshold, and is further configured to establish a heterogeneous path with the terminal device and a UPF. The transceiver module 11 is configured to receive second request information sent by an SMF, and is further configured to send fourth request information to the UPF.

When the apparatus 10 is configured to perform the method in FIG. 4, the transceiver module 11 may be configured to perform steps of sending and receiving information in the method, for example, steps S305 and S307, and the processing module 12 may be configured to perform processing steps in the method, for example, steps S303 and S306.

When the apparatus 10 is configured to perform the method in FIG. 6, the transceiver module 11 may be configured to perform steps of sending and receiving information in the method, for example, steps S504, S506, S507, and S508, and the processing module 12 may be configured to perform processing steps in the method, for example, steps S503 and S505.

When the apparatus 10 is configured to perform the method in FIG. 8, the transceiver module 11 may be configured to perform steps of sending and receiving information in the method, including receiving transmitted packet information, and the like. The processing module 12 may be configured to perform processing steps in the method, for example, steps S603 and S606.

When the apparatus 10 is configured to perform the method in FIG. 9A and FIG. 9B, the transceiver module 11 may be configured to perform steps of sending and receiving information in the method, including receiving transmitted packet information, and the like. The processing module 12 may be configured to perform processing steps in the method, for example, steps S703 and S706.

It should be understood that a specific process in which the units perform the foregoing corresponding steps is described in detail in the foregoing method embodiments. For brevity, details are not described herein.

In still another possible design, the apparatus 10 may correspond to the SMF network element in the core network device in the foregoing method embodiments, or may be a component (for example, a chip) of the SMF network element.

Correspondingly, the apparatus 10 may implement steps or procedures performed by the SMF network element in the foregoing method embodiments.

In a possible implementation, the transceiver module 11 is configured to receive third request information, is further configured to send, to the UPF, request information carrying an N4 rule, and is further configured to send indication information to the access network device. The processing module 12 is configured to determine, based on the third request information or local configuration information, to establish a heterogeneous path.

When the apparatus 10 is configured to perform the method in FIG. 4, the transceiver module 11 may be configured to perform steps of sending and receiving information in the method, for example, steps S301, S304, and S305. The processing module 12 may be configured to perform processing steps in the method, for example, steps S302 and S303.

When the apparatus 10 is configured to perform the method in FIG. 6, the transceiver module 11 may be configured to perform steps of sending and receiving information in the method, for example, steps S501 and S504. The processing module 12 may be configured to perform processing steps in the method, for example, steps S502 and S503.

When the apparatus 10 is configured to perform the method in FIG. 8, the transceiver module 11 may be configured to perform steps of sending and receiving information in the method, for example, steps S601 and S604. The processing module 12 may be configured to perform processing steps in the method, for example, steps S602, S603, and S606.

When the apparatus 10 is configured to perform the method in FIG. 9A and FIG. 9B, the transceiver module 11 may be configured to perform steps of sending and receiving information in the method, for example, steps S701, S704, S707, and S709. The processing module 12 may be configured to perform processing steps in the method, for example, steps S702, S703, S706, and S708.

It should be understood that a specific process in which the units perform the foregoing corresponding steps is described in detail in the foregoing method embodiments. For brevity, details are not described herein.

In still another possible design, the apparatus 10 may correspond to the UPF network element in the core network device in the foregoing method embodiments, or may be a component (for example, a chip) of the UPF network element.

Correspondingly, the apparatus 10 may implement steps or procedures performed by the UPF network element in the foregoing method embodiments.

In a possible implementation, the transceiver module 11 is configured to receive request information carrying an N4 rule, and is further configured to send indication information to the access network device. The processing module 12 is configured to enable, based on the N4 rule and the corresponding indication information, the established heterogeneous path for transmission.

When the apparatus 10 is configured to perform the method in FIG. 4, the transceiver module 11 may be configured to perform steps of sending and receiving information in the method, for example, steps S304 and S307. The processing module 12 may be configured to perform processing steps in the method, for example, step S308.

When the apparatus 10 is configured to perform the method in FIG. 6, the transceiver module 11 may be configured to perform steps of sending and receiving information in the method, for example, steps S506, S507, and S508. The processing module 12 may be configured to perform processing steps in the method, for example, step S509.

When the apparatus 10 is configured to perform the method in FIG. 8, the transceiver module 11 may be configured to perform steps of sending and receiving information in the method, for example, step S604. The processing module 12 may be configured to perform processing steps in the method, for example, steps S603, S605, S606, and S607.

When the apparatus 10 is configured to perform the method in FIG. 9A and FIG. 9B, the transceiver module 11 may be configured to perform steps of sending and receiving information in the method, for example, steps S704, S707, and S709. The processing module 12 may be configured to perform processing steps in the method, for example, steps S703, S705, S706, and S710.

It should be understood that a specific process in which the units perform the foregoing corresponding steps is described in detail in the foregoing method embodiments. For brevity, details are not described herein.

In still another possible design, the apparatus 10 may correspond to the PCF network element in the core network device in the foregoing method embodiments, or may be a component (for example, a chip) of the PCF network element.

Correspondingly, the apparatus 10 may implement steps or procedures performed by the PCF network element in the foregoing method embodiments.

In a possible implementation, the transceiver module 11 is configured to: receive third request information, and forward the third request information to an SMF network element. The processing module 12 is configured to determine, based on the third request information or local configuration information, to establish a heterogeneous path, establish the heterogeneous path based on the indication information, and is further configured to detect delay of a current transport path based on indication information.

It should be understood that a specific process in which the units perform the foregoing corresponding steps is described in detail in the foregoing method embodiments. For brevity, details are not described herein.

In still another possible design, the apparatus 10 may correspond to the AF network element in the core network device in the foregoing method embodiments, or may be a component (for example, a chip) of the AF network element.

Correspondingly, the apparatus 10 may implement steps or procedures performed by the AF network element in the foregoing method embodiments.

In a possible implementation, the transceiver module 11 is configured to send third request information and transmit a downlink packet; and the processing module 12 is configured to determine content carried in the third request information.

It should be understood that a specific process in which the units perform the foregoing corresponding steps is described in detail in the foregoing method embodiments. For brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. In an optional example, a person skilled in the art may understand that the apparatus 10 may be specifically the core network device in the foregoing embodiments, and may be configured to perform procedures and/or steps corresponding to the core network device in the foregoing method embodiments. Alternatively, the apparatus 10 may be specifically the terminal device in the foregoing embodiments, and may be configured to perform procedures and/or steps corresponding to the terminal device in the foregoing method embodiments. Alternatively, the apparatus 10 may be specifically the access network device in the foregoing embodiments, and may be configured to perform procedures and/or steps corresponding to the access network device in the foregoing method embodiments. To avoid repetition, details are not described herein again.

The apparatus 10 in the foregoing solutions has a function of implementing corresponding steps performed by the device in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a sending and receiving operation and a related processing operation in each method embodiment.

In addition, the transceiver module 11 may be a transceiver circuit (for example, may include a receiver circuit and a transmitter circuit), and the processing module may be a processing circuit.

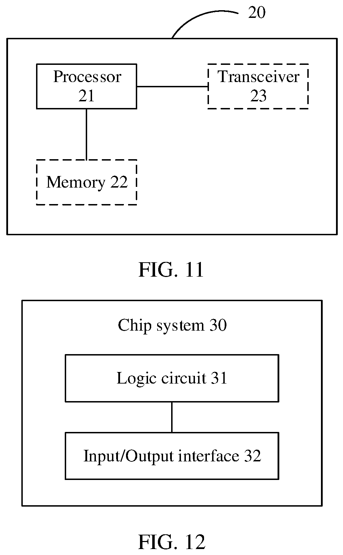

FIG. 11 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method performed by the terminal device, the access network device, or the core network device in the foregoing method embodiments.

The processor 21 may be one or more processors.

As shown in FIG. 11, the apparatus 20 may further include the memory 22. The memory 22 is configured to store a computer program or instructions and/or data. The memory 22 and the processor 21 may be integrated together, or may be disposed separately. The memory 22 may be one or more memories.

As shown in FIG. 11, the apparatus 20 may further include a transceiver 23. The transceiver 23 is configured to receive and/or send a signal. For example, the processor 21 is configured to control the transceiver 23 to receive and/or send a signal.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

FIG. 12 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device, the access network device, or the core network device in the foregoing method embodiments.

For example, the logic circuit 31 is configured to implement processing-related operations performed by the terminal device, the access network device, and the core network device in the foregoing method embodiments. The input/output interface 32 is configured to implement sending-and/or receiving-related operations performed by the terminal device, the access network device, and the core network device in the foregoing method embodiments.

This application further provides a communication apparatus, including a processor. The processor is coupled to a memory. The memory is configured to store a computer program or instructions and/or data. The processor is configured to execute the computer program or the instructions stored in the memory, or read data stored in the memory, to perform the method performed by the terminal device, the access network device, or the core network device in the foregoing method embodiments.

Optionally, there are one or more processors. There are one or more memories.

Optionally, the communication apparatus includes the memory. Optionally, the memory and the processor are integrated together or disposed separately.

This application provides a computer-readable storage medium. The computer-readable storage medium stores computer instructions. When the computer instructions are executed, the method performed by the terminal device, the access network device, or the core network device in the foregoing method embodiments is implemented.

This application provides a computer program product, including instructions. When the instructions are executed by a computer, the method performed by the terminal device, the access network device, or the core network device in the foregoing method embodiments is implemented.

This application provides a communication system. The communication system includes the terminal device and the access network device in the foregoing embodiments.

This application further provides a communication system. The communication system includes at least one of the terminal device, the access network device, and the core network device in the foregoing embodiments.

For explanations and beneficial effect of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium known in the conventional technology. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network device, an access network device, an access and mobility management function network element, a terminal, a session management function, or a multicast user plane function network element. Certainly, the processor and the storage medium may alternatively exist in the core network device, the access network device, the access and mobility management function network element, the terminal, the session management function, or the multicast user plane function network element as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise specified, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing descriptions are examples for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
establishing a second transport path, wherein the second transport path comprises at least one transport path between a terminal device and a core network device; and
sending first request information, wherein the first request information indicates a user plane function network element to enable, when a microburst exists on a current first transport path, the established second transport path to transmit a packet of a next frame.

2. The method according to claim 1, comprising:
sending second request information, wherein the second request information indicates an access network device to detect whether a microburst exists on the current first transport path.

3. The method according to claim 1 or 2, comprising:
receiving third request information, wherein the third request information carries first indication information indicating to establish the second transport path; and
determining, based on the first indication information or based on local configuration information, to establish the second transport path.

4. The method according to claim 2, wherein
the second request information comprises second indication information, and the second indication information indicates the access network device to send fourth request information when the access network device determines that a first time difference is greater than or equal to a first threshold;
the first time difference comprises a time difference between arrival of a last packet of a current frame and arrival of a first packet of a next frame; and
the fourth request information indicates the user plane function network element to enable the established second transport path for transmission.

5. The method according to claim 4, wherein the second request information further comprises the first threshold.

6. The method according to any one of claims 1 to 5, wherein
the first request information comprises an N4 rule, and when the user plane function network element receives third indication information, the user plane function network element enables, according to the N4 rule, the established second transport path to transmit a packet of a next frame; and
the third indication information is carried in the fourth request information.

7. The method according to claim 3, wherein:
the first indication information indicates that a service currently being transmitted has a requirement for path switching; or
the first indication information indicates that a service currently being transmitted has a requirement for quality of service adjustment.

8. A communication method, comprising:
detecting whether a microburst exists on a current first transport path; and
sending fourth request information when a microburst exists on the current first transport path, wherein the fourth request information indicates a user plane function network element to enable an established second transport path to transmit a packet of a next frame.

9. The method according to claim 8, comprising:
receiving second request information, wherein the second request information indicates an access network device to detect whether a microburst exists on the current first transport path.

10. The method according to claim 9, wherein
the second request information comprises second indication information, and the second indication information indicates the access network device to send fourth request information when the access network device determines that a first time difference is greater than or equal to a first threshold; and
the first time difference comprises a time difference between arrival of a last packet of a current frame and arrival of a first packet of a next frame.

11. The method according to claim 9 or 10, wherein the second request information further comprises the first threshold.

12. The method according to claim 10, wherein that the access network device sends the fourth request information when the access network device determines that the first time difference is greater than or equal to the first threshold comprises:
sending, by the access network device, the fourth request information to a session management function network element, and then sending, by the session management function network element, the fourth request information to the user plane function network element.

13. A communication method, comprising:
establishing a second transport path, wherein the second transport path comprises at least one transport path between a terminal device and a core network device; and
sending first request information, wherein the first request information indicates a user plane function network element to detect whether a microburst exists on a current first transport path, and to enable, when the microburst exists, the established second transport path to transmit a packet of a next frame.

14. The method according to claim 13, comprising:
receiving second request information, wherein the second request information carries first indication information indicating to establish the second transport path; and
determining, based on the first indication information or based on local configuration information, to establish the second transport path.

15. The method according to claim 13 or 14, wherein
the first request information comprises an N4 rule, and the user plane function network element detects a last packet of a frame according to the N4 rule; and
when the last packet of the frame is detected, detection of a second time difference of the current first transport path is triggered, and the second time difference comprises transmission delay of the first transport path.

16. The method according to claim 15, wherein the first request information comprises a second threshold, and when the second time difference is greater than or equal to the second threshold, it is determined that the microburst exists on the current first transport path.

17. The method according to any one of claims 14 to 16, wherein:
the first indication information indicates that a service currently being transmitted has a requirement for path switching; or
the first indication information indicates a service currently being transmitted has a requirement for quality of service adjustment.

18. A communication method, comprising:
establishing a second transport path, wherein the second transport path comprises at least one transport path between a terminal device and a core network device; and
receiving first request information, wherein the first request information indicates a user plane function network element to detect whether a microburst exists on a current first transport path, and to enable, when the microburst exists, the established second transport path to transmit a packet of a next frame.

19. The method according to claim 18, wherein
the first request information comprises an N4 rule, and the user plane function network element detects a last packet of a frame according to the N4 rule; and
when the last packet of the frame is detected, detection of a second time difference of the current first transport path is triggered, and the second time difference comprises transmission delay of the first transport path.

20. The method according to claim 19, wherein the first request information comprises a second threshold, and when the second time difference is greater than or equal to the second threshold, it is determined that the microburst exists on the current first transport path.

21. The method according to claim 19 or 20, comprising:
sending detection result information, wherein the detection result information comprises the second time difference, and further indicates a session management function network element to compare the second time difference with the second threshold; and
when the second time difference is greater than or equal to the second threshold, determining that the microburst exists on the current first transport path.

22. A communication apparatus, comprising:
a processor, configured to execute a computer program stored in a memory, so that the apparatus performs the method according to any one of claims 1 to 21.

23. The apparatus according to claim 22, wherein the apparatus further comprises the memory.

24. A computer-readable storage medium, wherein the computer-readable storage medium stores a computer program, and when the computer program is run on a computer, the computer is enabled to perform the method according to any one of claims 1 to 21.

25. A computer program product, wherein the computer program product comprises instructions used to perform the method according to any one of claims 1 to 21.

26. A communication system, comprising an access network device and a session management function network element, wherein
the session management function network element is configured to perform the method according to any one of claims 1 to 7; and
the access network device is configured to perform the method according to any one of claims 8 to 12.

27. A communication system, comprising a session management function network element and a user plane function network element, wherein
the session management function network element is configured to perform the method according to any one of claims 13 to 17; and
the user plane function network element is configured to perform the method according to any one of claims 18 to 21.
